# EUROPÄISCHE PATENTSCHRIFT

(11) **EP 2 215 509 B1**
(45) Veröffentlichungstag und Bekanntmachung des Hinweises auf die Patenterteilung: **02.04.2014**
(21) Anmeldenummer: 09801144.8
(22) Anmeldetag: 19.11.2009
(51) Int. Cl.: G02B 7/02, F21V 17/00

(54) **HYBRIDOPTIK**
HYBRID OPTIC
DISPOSITIF OPTIQUE HYBRIDE

(30) Priorität: 21.11.2008 DE 102008058565
(43) Veröffentlichungstag der Anmeldung: 11.08.2010
(73) Patentinhaber: OSRAM GmbH, 80807 München (DE); Moulded Optics GmbH, 35641 Schöffengrund (DE)
(72) Erfinder: PFEIL, Martin, 35641 Schöffengrund (DE); VOLLMER, Ralf, 89075 Ulm (DE); REINERS, Thomas, 89429 Bachhagel (DE)
(74) Vertreter: Polte, Willi
(86) Internationale Anmeldenummer: PCT/DE2009/001664
(87) Internationale Veröffentlichungsnummer: WO 2010/057489

(56) Entgegenhaltungen:
- WO-A1-03/074251
- GB-A- 2 254 136
- US-A- 5 141 547

## Beschreibung

### Technisches Gebiet

Die Erfindung betrifft Verfahren zur Herstellung von Hybridoptiken gemäß Patentanspruch 1.

### Stand der Technik

Dokument WO 03/074251 A1 offenbart eine derartige Hybridoptik, die eine Glaslinse und einen diese umgebenden gespritzten Linsenhalter aus Kunststoff aufweist. Nach dem Umspritzen können aus dem Glas Alkali- und Erdalkalimetalle (insbesondere Natrium) austreten und den umgebenden Kunststoff chemisch angreifen. Dieser Effekt wird durch das Einwirken von Temperatur und Feuchtigkeit, wie sie z. B. beim. Einsatz der Hybridoptik in einem Fahrzeugscheinwerfer entstehen, verstärkt. Dadurch ist die Haltbarkeit bzw. die Beständigkeit der Verbindung zwischen der Glaslinse (z.B. aus Kronglas) und dem Linsenhalter (z.B. aus Polycarbonat) und damit die Haltbarkeit bzw. die Beständigkeit der Hybridoptik verringert.

### Darstellung der Erfindung

Die Aufgabe der vorliegenden Erfindung ist es, die Haltbarkeit bzw. die Beständigkeit von Hybridoptiken zu verbessern.

Diese Aufgabe wird gelöst durch ein Verfahren zur Herstellung einer Hybridoptik gemäß Patentanspruch 1.

Besonders vorteilhafte Ausgestaltungen sind in den abhängigen Patentansprüchen beschrieben.

Bei dem erfindungsgemäßen Verfahren zur Erhöhung der Haltbarkeit einer Hybridoptik, die ein optisches Glaselement und einen Halter aus Kunststoff aufweist, wobei zumindest ein Anlageabschnitt des Glaselements an dem Halter anliegt bzw. von dessen Kunststoff formschlüssig umspritzt ist, wird das Glaselement vor dem Umspritzen mit dem Kunststoff mit Salzsäure beaufschlagt. Durch diese Neutralisierung werden Alkali- und Erdalkalimetalle (insbesondere Natrium) aus den oberflächennahen Bereichen des Glaselements entfernt. Dadurch wird der Kunststoff des Halters weniger angegriffen und die Haltbarkeit bzw. Beständigkeit der Hybridoptik erhöht.

Bei einer besonders bevorzugten Weiterbildung des erfindungsgemäßen Verfahrens kocht die Salzsäure während der Beaufschlagung oder sie ist gasförmig. Durch hohe Temperaturen wird die Entfernung der Alkali- und Erdalkalimetalle (insbesondere Natrium) aus den oberflächennahen Bereichen des Glaselements beschleunigt.

Dabei wird es bevorzugt, wenn die Salzsäure hoch konzentriert (z.B. 33%ig) ist. Dadurch wird die Entfernung der Alkali- und Erdalkalimetalle weiter beschleunigt.

Die Beaufschlagung kann mehrere Stunden dauern. Durch derartig lange Beaufschlagung wird die Entfernung der Alkali- und Erdalkalimetalle vervollständigt.

Bei einer Hybridoptik, die mit dem erfindungsgemäßen Verfahren gefertigt werden kann, und die ein Glaselement und einen Halter aus Kunststoff aufweist, wobei zumindest ein Anlageabschnitt des Glaselements an dem Halter anliegt, besteht das Glaselement aus Borosilikat-Glas, oder der Halter besteht aus Acrylnitril-Butadien-Styrol (ABS) oder aus Polyphenylensulfid (PPS). Bei Borosilikat-Glas ist die Diffusion von Alkali- und Erdalkalimetallen so stark vermindert, dass auch z.B. das kostengünstige Polycarbonat als Werkstoff für den Halter eingesetzt werden kann. Die beiden genannten Kunststoffe als Werkstoffe für den Halter sind auch unter der Einwirkung von Wärme und Feuchtigkeit resistent gegenüber den aggressiven Alkali-Verbindungen, wie z.B. NaHO und KaOH. Dadurch wird die Haltbarkeit bzw. Beständigkeit der Hybridoptik erhöht.

Bei einer Ausführung bildet das Glaselement einen Lichtleiter aus, der eine etwa ebene Lichtaustrittsfläche aufweist. Diese Lichtaustrittsfläche ist etwa senkrecht zur Richtung des von einer LED erzeugten und aus der Hybridoptik austretenden Lichts angeordnet.

Bei einer bevorzugten Weiterbildung weist der Lichtleiter bzw. seine Lichtaustrittsfläche zwei etwa halbkreisförmige einander gegenüber liegende Anlageabschnitte auf, die von an einer Innenwandung des Halters angeordneten Ausnehmungen aufgenommen sind.

Bei einer alternativen Ausführung der Hybridoptik bildet das Glaselement eine Glaslinse aus, während der Halter entsprechend einen Linsenhalter ausbildet. Diese Hybridoptik eignet sich für den Einsatz im Zusammenhang mit herkömmlichen Lampen und herkömmlicher Brechung des Lichts durch Glaslinsen.

Bei einer weiteren Ausführung bildet das Glaselement eine Abdeckplatte aus, während der Halter entsprechend einen Abdeckplattenhalter ausbildet.

Alle oben beschriebenen Hybridoptiken lassen sich vorteilhafter Weise im oder an Fahrzeugscheinwerfern anordnen, bei denen die Anforderungen bzgl. Haltbarkeit auch bei Feuchtigkeit und Wärme besonders hoch sind.

### Bevorzugte Ausführung der Erfindung

Im Folgenden wird die Erfindung anhand eines Ausführungsbeispiels näher erläutert.

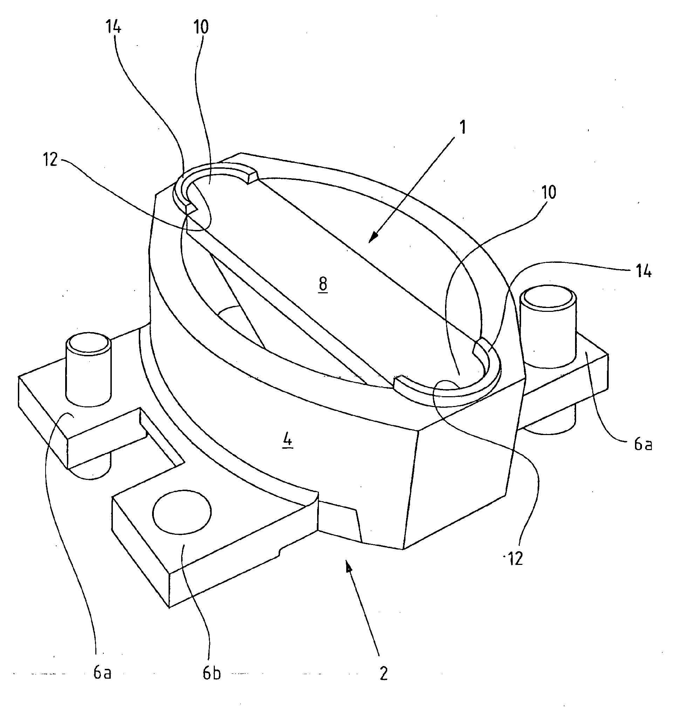

Die Figur zeigt eine Hybridoptik, die entsprechend dem erfindungsgemäßen Verfahren gefertigt werden kann, mit einem Lichtleiter 1 aus Glas und einem Halter 2 aus Kunststoff in einer perspektivischen Ansicht.

Der Halter 2 hat einen etwa ovalen bzw. ellipsenförmigen Hohlkörper 4, an dessen (in der Figur) unteren Endabschnitt vier Füße 6a, 6b angebracht sind, von denen in der Figur nur drei dargestellt sind.

Der Halter 2 steht mit den (in der Figur) unteren Anlageflächen der vier Füße 6a, 6b auf einer nicht gezeigten Leiterplatte, wobei in einer mittleren Position der Leiterplatte eine (nicht gezeigte) LED als Lichtquelle angeordnet ist.

Zwei diagonal gegenüber liegende Füße 6a haben Verbindungszapfen, die in entsprechende Ausnehmungen der Leiterplatte eingeführt werden, während die beiden anderen diagonal gegenüber liegenden Füße 6b jeweils eine Ausnehmung haben, mit der der entsprechende Fuß 6b über je eine Schraube mit der Leiterplatte verbunden wird.

Im Innern des Hohlkörpers 4 des Halters 2 ist der Lichtleiter 1 aus Glas angeordnet. Er weist an ihrer (in der Figur) oberen Seite einen flächigen Lichtaustrittsabschnitt 8 auf, der sich etwa parallel zur (nicht gezeigten) Leiterplatte ersteckt. Der Lichtaustrittsabschnitt 8 ist länglich ausgebildet und hat an seinen beiden längeren Seiten etwa parallele Kanten, während an den beiden kurzen Seiten jeweils ein etwa halbkreisförmiger Anlageabschnitt 10 ausgebildet ist. Jeder Anlageabschnitt 10 des Lichtleiters 1 ist in einer etwa halbkreisförmigen Ausnehmung 12 aufgenommen, die an gegenüber liegenden und von der Leiterplatte entfernten Bereichen der Innenwandung des Hohlkörpers 4 ausgebildet sind. Dabei übergreift je ein Wulst 14 des Halters 2 den Anlageabschnitt 10 des Lichtleiters 1.

Insbesondere die Anlageabschnitte 10 des Lichtleiters 1 der Hybridoptik wurden erfindungsgemäß vor dem Umspritzen mit dem Kunststoff des Halters 2 mit 33%iger kochender bzw. dampfender Salzsäure beaufschlagt. Nach 22-tägiger Beaufschlagung ist eine vollständige Neutralisierung insbesondere der Anlageabschnitte 10 des Lichtleiters 1 durch Verarmung der Alkali- bzw. Erdalkali-Atome erreicht. Somit ist eine Schwächung der Ausnehmungen 12 und der Wülste 14 des aus Kunststoff (z.B. Polycarbonat) bestehenden Halters 2 verhindert.

Alternativ kann die Schwächung des Kunststoffs der Hybridoptik auch dadurch verhindert werden, dass der Lichtleiter 1 aus alkaliarmem bzw. alkalifreiem Borosilikat-Glas (z.B. Borsilikat-33-Glas) besteht.

Oder der Halter 2 besteht aus einem resistenten Kunststoff, wie z.B. Acrylnitril-Butadien-Styrol (ABS) oder Polyphenylensulfid (PPS).

Erfindungsgemäß ist dadurch die Haltbarkeit einer Hybridoptik insbesondere auch bei längerem Einwirken von höheren Temperaturen und erhöhter Luftfeuchtigkeit z.B. bei einem Einsatz im Automobil verbessert.

Bei einer Anordnung der erfindungsgemäßen Hybridoptik über einer LED und nach einer Befestigung ihrer Füße 6a, 6b über die Zapfen bzw. Schrauben ist eine dauerhafte Fixierung des Lichtleiters 1 über der (nicht gezeigten) LED gesichert.

Offenbart ist ein Verfahren zur Erhöhung der Haltbarkeit einer Hybridoptik, die ein optisches Glaselement und einen Halter aus Kunststoff aufweist, wobei zumindest ein Anlageabschnitt des Glaselements an dem Halter anliegt. Das Glaselement wird vor einem Umspritzen mit dem Kunststoff des Halters mit Salzsäure beaufschlagt.

## Patentansprüche

1. Verfahren zur Erhöhung der Haltbarkeit einer Hybridoptik, die ein optisches Glaselement (1) und einen Halter (2) aus Kunststoff aufweist, wobei zumindest ein Anlageabschnitt (10) des Glaselements (1) an dem Halter (2) anliegt, **dadurch gekennzeichnet, dass** das Glaselement (1) vor einem Umspritzen mit dem Kunststoff des Halters (2) mit Salzsäure beaufschlagt wird.

2. Verfahren nach Patentanspruch 1, wobei die Salzsäure kocht oder gasförmig ist.

3. Verfahren nach Patentanspruch 1 oder 2, wobei die Salzsäure hoch konzentriert ist.

4. Verfahren nach einem der vorangegangenen Patentansprüche, wobei die Beaufschlagung mehrere Stunden dauert.

## Claims

1. Method for increasing the durability of a hybrid optic which comprises an optical glass element (1) and a holder (2) made of plastic, wherein at least one contact segment (10) of the glass element (1) contacts the holder (2), **characterized in that** the glass element (1) is exposed to hydrochloric acid prior to encapsulation in the plastic of the holder (2).

2. Method according to Patent Claim 1, wherein the hydrochloric acid boils or is gaseous.

3. Method according to Patent Claim 1 or 2, wherein the hydrochloric acid is highly concentrated.

4. Method according to one of the preceding patent claims, wherein the exposure lasts several hours.

## Revendications

1. Procédé d'augmentation de la durabilité d'une optique hybride comprenant un élément optique en verre (1) et un support (2) en matière plastique, au moins une portion d'appui (10) de l'élément en verre (1) étant en appui sur le support (2), **caractérisé en ce que** l'élément de verre (1), avant enrobage avec la matière plastique, est exposé à de l'acide chlorhydrique.

2. Procédé selon la revendication 1, dans lequel l'acide chlorhydrique est bouillant ou gazeux.

3. Procédé selon la revendication 1 ou 2, dans lequel l'acide chlorhydrique est fortement concentré.

4. Procédé selon l'une des revendications précédentes, dans lequel l'exposition dure plusieurs heures.
